# EUROPÄISCHE PATENTSCHRIFT

(11) **EP 3 638 443 B1**
(45) Veröffentlichungstag und Bekanntmachung des Hinweises auf die Patenterteilung: **07.06.2023**
(21) Anmeldenummer: 19755804.2
(22) Anmeldetag: 02.08.2019
(51) Int. Cl.: B23B 29/04, B23B 27/00, B23B 31/107

(54) **BOHRSTANGENANORDNUNG**
BORING BAR ARRANGEMENT
ASSEMBLAGE DE BARRE D'ALÉSAGE

(30) Priorität: 26.02.2019 DE 102019001347
(43) Veröffentlichungstag der Anmeldung: 22.04.2020
(73) Patentinhaber: Kimmich, Hubert, 78713 Schramberg (DE)
(72) Erfinder: Kimmich, Hubert, 78713 Schramberg (DE)
(74) Vertreter: Cohausz Hannig Borkowski Wißgott
(86) Internationale Anmeldenummer: PCT/EP2019/000236
(87) Internationale Veröffentlichungsnummer: WO 2020/011394

(56) Entgegenhaltungen:
- EP-A1- 0 405 443
- EP-A1- 3 059 035
- WO-A2-2006/105564
- CN-B- 102 151 859
- DE-A1- 2 713 529
- DE-U1- 20 010 789
- GB-A- 256 153
- JP-U- 3 151 632
- US-A1- 2007 101 839
- US-A1- 2008 179 839

## Beschreibung

Bohrstangenanordnung mit einer Bohrstange und einer Befestigungsvorrichtung zum Befestigen einer Bohrstange an der spanabhebenden Maschine mit einer im Maschinenfutter befestigbaren zylindrischen Reduzierhülse, an deren vorderem, dem Maschinenfutter abgewandten Ende ein Hohlprofil vorsteht, dessen zur Achse der Reduzierhülse koaxialer insbesondere zylindrischer Innenraum die Bohrstange aufnimmt, wobei ein aus dem Hohlprofil vorstehender Endbereich der Bohrstange ein Schneidwerkzeug trägt.

Dokument EP 3 059 035 A offenbart eine Bohrstangenanordnung gemäß dem Oberbegriff des Anspruchs 1.

Eine solche Anordnung ist aus der JP 3 151 632 U bekannt. Hier hat es sich gezeigt, dass beim Ausdrehen zylindrischer Hohlräume zwischen der Hohlrauminnenwand und der Außenwand des Hohlprofils ein zu geringer Abstand besteht, so dass tiefe und enge Hohlräume nicht ausgedreht werden können, ohne eine Kollision des Hohlprofils mit dem Hohlraum verhindern zu können.

Ferner ist aus der US 2008/179839 A1 eine Bohrstangenanordnung bekannt mit einer Bohrstange und einer Befestigungsvorrichtung zum Befestigen der Bohrstange an einer spanabhebenden Maschine mit einer im Maschinenfutter befestigten Reduzierhülse, an deren vorderem, dem Maschinenfutter abgewandten Ende die Bohrstange axial zur Achse der Reduzierhülse vorsteht, wobei das Maschinenfutter und die Bohrstange um dieselbe Drehachse rotierbar sind und wobei der außen vorstehende Endbereich der Bohrstange ein Schneidwerkzeug trägt.

Aufgabe der Erfindung ist es, eine Anordnung der eingangs genannten Art so zu verbessern, dass die Bohrstange durch die verbesserte höhere Steifigkeit auch in engen und tieferen Bohrungen eindringen kann und bessere Bearbeitungsergebnisse und kürzere Bearbeitungszeiten erzielt.

Diese Aufgabe wird erfindungsgemäß durch die Merkmale des Anspruchs 1 gelöst.

Zwischen der Werkzeugschneide und dem die Bohrstange stabilisierenden Hohlprofil besteht ein vergrößerter Freiabstand, so dass das Hohlprofil kollisionsfrei dem Schneidwerkzeug in die Bohrung folgen kann.

Folgende Vorteile sind durch die erfindungsgemäße Bohrstangenanordnung erreichbar:
- Durch die Erhöhung der Stabilität der Bohrstange können größere Zustellungen, Vorschübe und Schnittgeschwindigkeiten erzielt werden, wodurch sich die Bearbeitungszeit entsprechend verkürzt.
- Durch die Verminderung der Vibrationen werden bessere Oberflächengüten erreicht. Das Entstehen von "Rattermarken" durch Vibrationen wird extrem minimiert.
- Durch geringere Vibrationen wird die Standzeit der Werkzeuge erhöht, wodurch die Werkzeugkosten gesenkt werden.
- Auch mit einfachen und kostengünstigen Bohrstangen werden deutlich bessere und preiswertere Ergebnisse erzielt.
- Für die Herstellung einer größeren und/oder tieferen Bohrung kann auch eine kleinere (dünnere) und/oder kürzere preisgünstigere Bohrstange in dem Bohrstangenstabilisator eingesetzt werden. Die Vielzahl der Werkzeuge kann somit reduziert werden, was wiederum eine Kostenreduktion bewirkt.
- Der Einsatz von innen gekühlten Bohrstangen ist nicht zwingend erforderlich, da die Kühlung über die seitlichen Flächen der Bohrstange in Verbindung mit dem Bohrstangenstabilisator direkt auf die Bearbeitungsschneide erfolgen kann.
- Die Ausspannlänge der Bohrstange ist variabel einstellbar, wodurch mit der Bohrstange auch noch kleinere Durchmesser bearbeitet werden können.
- Mit einer kleineren, dünneren Bohrstange können jetzt auch problemlos größere und tiefere Durchmesser gedreht werden, was ohne den Bohrstangenstabilisator meist unzureichende Ergebnisse und Bearbeitungszeiten zur Folge hat. Das bedeutet wiederum kürzere Rüstzeiten und somit weitere Einsparungen.
- Durch seine hohe Stabilität kann das Werkzeug bei Schrupp- und/oder Schlichtbearbeitungen für Innen- und auch für Außenbearbeitungen gleichermaßen eingesetzt werden. Bei Mehrachsenmaschinen erspart dies den Werkzeugwechsel z. B. von einem Innen- zu einem Außenbearbeitungswerkzeug. Das sind weitere Zeit- und Kosteneinsparungen durch eliminierte Nebenzeiten und geringere Werkzeugkosten auf den Bearbeitungsmaschinen.

Vorzugsweise wird vorgeschlagen, dass die Außenwand des stabilisierenden Hohlprofils zylindrisch ist mit einem kreisförmigen oder ovalen Querschnitt. Ferner kann die Außenwand des stabilisierenden Hohlprofils einen Querschnitt mit optionalen Abflachungen aufweisen.

Ein ausreichender Freiabstand zwischen der Bohrungsinnenwand und der Außenseite des Hohlprofils wird erreicht, wenn die Hohlprofilwand im Bereich ihrer geringsten Dicke ½ bis 1/30 der Dicke aufweist, die die Hohlprofilwand im Bereich ihrer größten Dicke aufweist.

Das stabilisierende Hohlprofil kann in einer Längsausnehmung der Reduzierhülse insbesondere längsverstellbar einliegen und fixiert sein.

Vorzugsweise ist das stabilisierende Hohlprofil an der vorderen Stirnseite der Reduzierhülse angeformt.

Die genannten Vorteile sind besonders dann gegeben, wenn der Abstand der Achse des stabilisierenden Hohlprofils von der Achse der Reduzierhülse und der Bohrstange 1/10 bis 1/30 vorzugsweise ¼ bis ¾ des Durchmessers der Bohrstange beträgt.

Vorzugsweise wird vorgeschlagen, dass auf der Seite bzw. dem Bereich der Vorrichtung, an der/dem das Schneidwerkzeug vorsteht, die überdeckende Wand des Hohlprofils eine geringere Dicke D1 aufweist als die Dicke D2 der Hohlprofilwand in den übrigen Seiten/Bereichen.

Die Stabilität der Bohrstange wird dadurch wesentlich erhöht, wenn die Querschnittsfläche der Bohrstange im von dem Schneidwerkzeug entfernten Bereich größer ist als in dem dem Schneidwerkzeug näheren Bereich, so dass die Querschnittsfläche sich von der Einspannstelle zum Schneidwerkzeug hin verringert. Dabei kann die Verringerung der Querschnittsfläche der Bohrstange stufenförmig erfolgen.

Ausführungsbeispiele der Erfindung sind in den Zeichnungen dargestellt und werden im Folgenden näher beschrieben. Es zeigen
- Fig. 1: eine perspektivische Ansicht von Reduzierhülse, Hohlprofil und Bohrstange,
- Fig. 2: einen axialen senkrechten Schnitt durch die Reduzierhülse mit angeformtem stabilisierenden Hohlprofil und einliegender Bohrstange,
- Fig. 3: einen axialen waagerechten Schnitt durch die Reduzierhülse mit angeformtem stabilisierenden Hohlprofil und einliegender Bohrstange,
- Fig. 4: einen axialen senkrechten Schnitt durch eine nicht erfindungsgemäße Ausführung ohne Hohlprofil,
- Fig. 5: einen axialen waagerechten Schnitt durch eine nicht erfindungsgemäße Ausführung ohne Hohlprofil,
- Fig. 6: eine perspektivische Ansicht einer nicht erfindungsgemäßen Ausführung mit Spannhülse,
- Fig. 7: eine perspektivische Ansicht einer nicht erfindungsgemäßen Ausführung mit Spannhülse und stufenförmiger Bohrstange.

Die erfindungsgemäße Bohrstangenanordnung mit einer Vorrichtung 1 zum Befestigen einer Bohrstange 3 an einer spanabhebenden Maschine (Maschine nicht dargestellt) weist eine Reduzierhülse (Spannhülse) 2 auf, die einen zylindrischen Außenmantel 2a aufweist, mit dem sie in einer zylindrischen Ausnehmung des Maschinenfutters befestigbar ist. Am äußeren Ende weist die Reduzierhülse einen optionalen Flansch 2b auf. Ferner weist die Reduzierhülse 2 eine innere Längsausnehmung 2c auf, in der formschlüssig die Bohrstange 3 längsverstellbar einliegt, deren Außenmantel 3a zylindrisch ist, so dass die Längsausnehmung 2c der Reduzierhülse 2 auch zylindrisch ist mit dem gleichen Durchmesser D. Damit besitzen die Reduzierhülse (Spannhülse) 2 und die Bohrstange 3 und die Längsausnehmung 5a des Hohlprofils 5 die gleiche Längsachse L2.

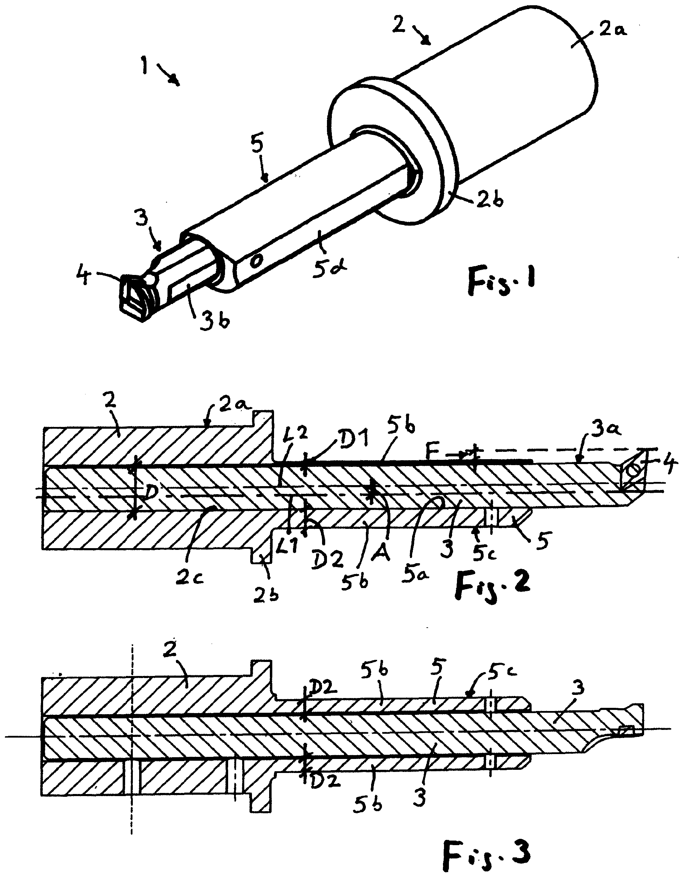

Im Ausführungsbeispiel nach den Fig. 1 bis 3 weist der Außenmantel 3a der Bohrstange 3 optionale längs gerichtete Anflachungen 3b auf. Am vorderen Ende der Bohrstange ist ein Schneidwerkzeug 4 auswechselbar befestigt.

Am vorderen Ende der Reduzierhülse 2 ist ein Hohlprofil 5 als Bohrstangenstabilisator angeformt, das eine zylindrische Längsausnehmung 5a aufweist, in der die Bohrstange 3 formschlüssig längsverstellbar einliegt, so dass die Längsausnehmung 5a mit der Längsausnehmung 2c der Reduzierhülse fluchtet und dieselbe Längsachse L2 besitzt.

Das, die Bohrstange 3 stabilisierende Hohlprofil 5 überdeckt mit seiner gesamten Länge die Bohrstange 3, wobei auf der Seite bzw. dem Bereich der Vorrichtung, an der/dem das Schneidwerkzeug 4 vorsteht, die überdeckende Wand 5b des Hohlprofils eine geringere Dicke D1 aufweist als die Dicke D2 der Hohlprofilwand 5b in den übrigen Seiten/Bereichen 5c. Hierdurch liegt die Längsachse L1 des Hohlprofils 5 parallel und in einem Abstand A zur Längsachse L2 der zylindrischen Längsausnehmung 5a des Hohlprofils 5.

Dadurch entsteht zwischen der Werkzeugschneide und der Außenwand des Hohlprofils 5 ein Freiabstand F wie in Fig. 2 dargestellt. Das ermöglicht dem Hohlprofil als Bohrstangenstabilisator, der Werkzeugschneide in die Bohrung folgen zu können, ohne mit dem Werkstück zu kollidieren.

In einer nicht dargestellten Ausführung ist das Hohlprofil 5 an der Reduzierhülse 2 nicht angeformt, sondern liegt in einer Ausnehmung insbesondere Bohrung der Reduzierhülse formschlüssig ein, so dass die Innenkontur der Ausnehmung/Bohrung der Reduzierhülse 2 der Außenkontur des Hohlprofils5 entspricht.

Durch Schrauben ist die Bohrstange 3 im Hohlprofil 5 und in der Reduzierhülse 2 festgeklemmt. Bei der Ausführung mit einem in der Reduzierhülse einliegenden Hohlprofil ist diese in der Reduzierhülse auch durch Schrauben festgeklemmt. Die Klemmung und/oder Fixierung kann auch durch andere Verfahren wie z. B. durch das Einschrumpfen der Bohrstange erfolgen.

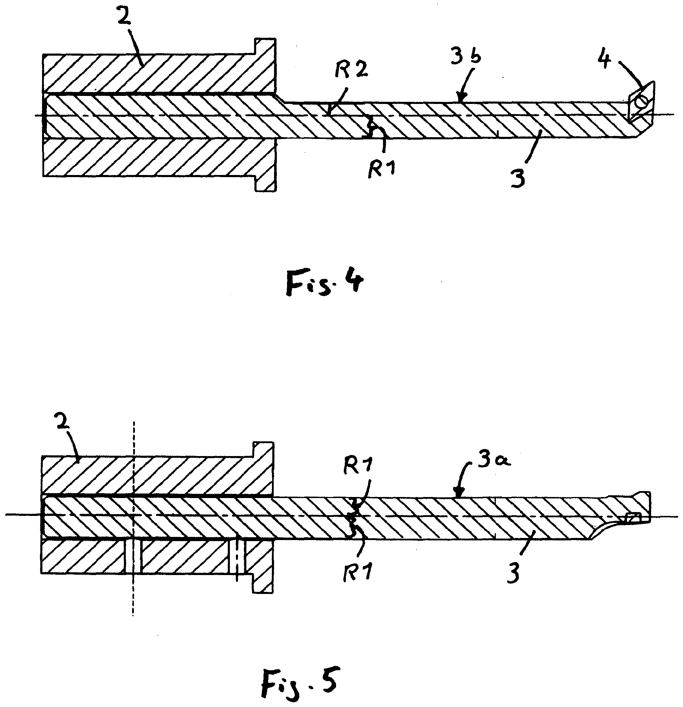

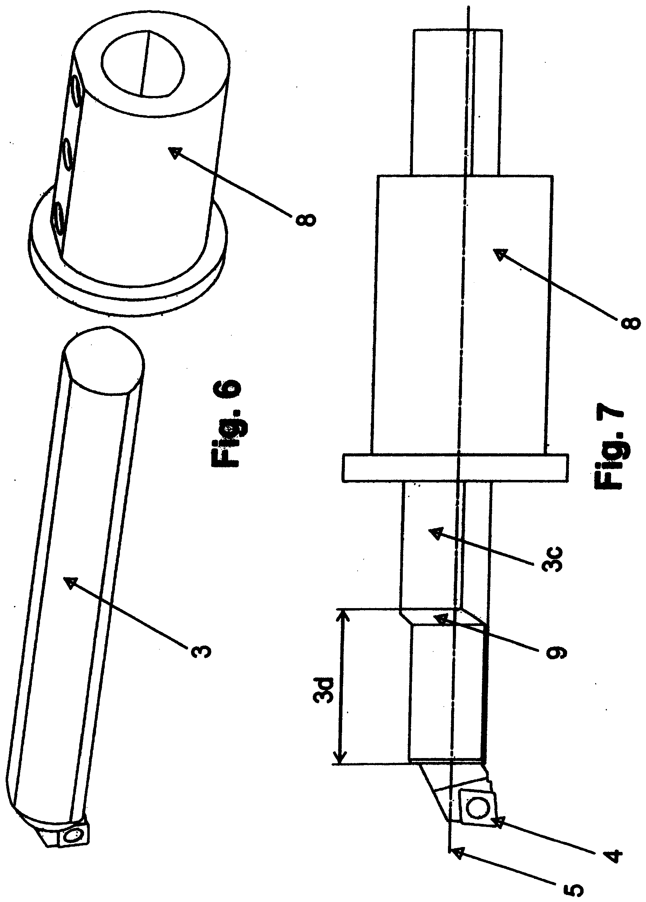

In den Fig. 4 bis 7 sind nicht erfindungsgemäße Ausführungen dargestellt, bei denen das die Bohrstange 3 stabilisierende Hohlprofil 5 fehlt. Stattdessen ist die in der Reduzierhülse 2 gleichachsig einliegende Bohrstange ausreichend stabil ausgeführt, wie insbesondere Fig. 6 und 7 zeigen. Hierbei kann die Bohrstange 3 einen Bereich 3c mit besonders großem Querschnitt aufweisen, der von dem Schneidwerkzeug 4 weiter entfernt liegt. Nahe dem Schneidwerkzeug 4 weist die Bohrstange einen Bereich 3d geringeren Querschnitts auf, so dass auch noch in kleineren Öffnungen/Bohrungen gearbeitet werden kann. Der Übergang von großen zum geringeren Querschnitt erfolgt vorzugsweise durch eine oder mehrere Stufen. Während bei der Ausführung nach Fig. 1 bis 3 das Hohlprofil 5 als Bohrstangenstabilisator wirkt, und eine Aufflachung aufweist, fehlt in den Ausführungen nach Fig. 4 bis 7 das Hohlprofil 5 und die Bohrstange 3 ist selber abgeflacht mit seiner abgeflachten Bohrstangenaußenwand (Abflachung 3b) mit denselben Vorteilen, wie sie oben zur Abflachung des Hohlprofils 5 genannt sind.

Die Außenwand 3a der Bohrstange 3 ist zylindrisch mit der Bohrstangen-Drehachse 5 als Zylinderachse bis auf den abgeflachten Bereich 3b der Bohrstangen-Außenwand 3a, an dessen Ende das Schneidwerkzeug 4 von der Bohrstange vorsteht und der zwischen der Reduzierhülse 2 und dem Schneidwerkzeug 4 liegt, so dass in dem abgeflachten Bereich 3b die Bohrstangenaußenwand 3a einen geringeren Radius R2 aufweist als der Radius R1 der übrigen zylindrischen Bohrstangenaußenwand. Hierbei beträgt der Radius R2 der Bohrstange im abgeflachten Bereich 3b ½ bis 9/10 des Radius R1 der übrigen zylindrischen Bohrstangenaußenwand 3a.

In den Ausführungen nach Fig. 6 und 7 fehlt auch das Hohlprofil 5 als Bohrstangenstabilisator und die Bohrstange 3 weist wieder eine Abflachung auf durch den abgeflachten Bereich 3b der Bohrstangenaußenwand.

Die Bohrstange 3 liegt in einer Spannhülse 8 oder einer Reduzierhülse außermittig ein, die die gleiche Drehachse wie die Bohrstange aufweist. Hierbei verringert sich die Querschnittsfläche der Bohrstange 3 von ihrer Einspannstelle zum Schneidwerkzeug 4 hin. Dabei erfolgt die Verringerung der Querschnittsfläche der Bohrstange 3 vorzugsweise stufenförmig, siehe Stufe 9.

## Patentansprüche

1. Bohrstangenanordnung mit einer Bohrstange (3) und einer Befestigungsvorrichtung (1) zum Befestigen der Bohrstange (3) an einer spanabhebenden Maschine mit einer im Maschinenfutter befestigbaren zylindrischen Reduzierhülse (2), an deren vorderem, dem Maschinenfutter abgewandten Ende ein Hohlprofil (5) vorsteht, dessen zur Achse (L2) der Reduzierhülse (2) koaxialer insbesondere zylindrischer Innenraum (5a) die Bohrstange (3) aufnimmt, wobei ein aus dem Hohlprofil vorstehender Endbereich der Bohrstange (3) ein Schneidwerkzeug (4) trägt, wobei die zwischen dem Hohlprofilinnenraum (5a) und der Hohlprofilaußenwand befindliche Wand (5b) des die Bohrstange (3) stabilisierenden Hohlprofils (5) in dem Vorrichtungsseitenbereich, an dem das Schneidwerkzeug (4) an der Bohrstange (3) vorsteht, eine geringere Dicke (D1) aufweist als eine Dicke (D2) der übrigen Wand (5b) des Hohlprofils (5),
**dadurch gekennzeichnet, dass**
die Längsachse (L1) des Hohlprofils (5) achsparallel und in einem Abstand (A) zur gemeinsamen Achse (L2) der Reduzierhülse (2) und der Bohrstange (3) liegt.

2. Bohrstangenanordnung nach Anspruch 1,**dadurch gekennzeichnet, dass** die Außenwand (5c) des stabilisierenden Hohlprofils (5) zylindrisch ist mit einem kreisförmigen oder ovalen Querschnitt.

3. Bohrstangenanordnung nach Anspruch 1 oder 2, **dadurch gekennzeichnet, dass** die Außenwand (5c) des stabilisierenden Hohlprofils (5) einen Querschnitt mit Abflachungen (5d) aufweist.

4. Bohrstangenanordnung nach einem der vorherigen Ansprüche, **dadurch gekennzeichnet, dass** die Hohlprofilwand (5b) im Bereich ihrer geringsten Dicke (D1) ½ bis 1/30 der Dicke aufweist, die die Hohlprofilwand im Bereich ihrer größten Dicke (D2) aufweist.

5. Bohrstangenanordnung nach einem der vorherigen Ansprüche, **dadurch gekennzeichnet, dass** das stabilisierende Hohlprofil (5) an der vorderen Stirnseite der Reduzierhülse (2) angeformt ist.

6. Bohrstangenanordnung nach einem der Ansprüche 1 bis 4, **dadurch gekennzeichnet, dass** das stabilisierende Hohlprofil (5) in einer Längsausnehmung der Reduzierhülse (2) insbesondere längsverstellbar einliegt und fixiert ist.

7. Bohrstangenanordnung nach einem der vorherigen Ansprüche, **dadurch gekennzeichnet, dass** der Abstand der Achse (L1) des stabilisierenden Hohlprofils (5) von der Achse (L2) der Reduzierhülse und der Bohrstange 1/10 bis 1/30 vorzugsweise ¼ bis ¾ des Durchmessers der Bohrstange (3) beträgt.

8. Bohrstangenanordnung nach einem der vorherigen Ansprüche, **dadurch gekennzeichnet, dass** auf der Seite bzw. dem Bereich der Vorrichtung, an der/dem das Schneidwerkzeug 4 vorsteht, die überdeckende Wand (5b) des Hohlprofils eine geringere Dicke (D1) aufweist als eine Dicke (D2) der Hohlprofilwand (5b) an den übrigen Seiten/Bereichen.

9. Bohrstangenanordnung nach einem der vorherigen Ansprüche, **dadurch gekennzeichnet, dass** die Querschnittsfläche der Bohrstange (3) im von dem Schneidwerkzeug entfernten Bereich (3c) größer ist als in dem dem Schneidwerkzeug näheren Bereich (3d), so dass die Querschnittsfläche sich von der Einspannstelle zum Schneidwerkzeug (4) hin verringert.

10. Bohrstangenanordnung nach Anspruch 9, **dadurch gekennzeichnet, dass** die Verringerung der Querschnittsfläche der Bohrstange (3) stufenförmig erfolgt.

## Claims

1. Boring bar arrangement comprising a boring bar (3) and a fixing device (1) for fixing the boring bar (3) to a material-removing machine, having a cylindrical reducing sleeve (2) which can be fixed in the machine chuck and at the front end of which, facing away from the machine chuck, a hollow profile (5) projects, of which the in particular cylindrical interior (5a), coaxial with the axis (L2) of the reducing sleeve (2), receives the boring bar (3), wherein an end region of the boring bar (3), projecting from the hollow profile, carries a cutting tool (4), wherein the wall (5b) of the hollow profile (5) stabilizing the boring bar (3), located between the hollow profile interior (5a) and the hollow profile outer wall, has a lower thickness (D1) in the device lateral region in which the cutting tool (4) projects from the boring bar (3) than a thickness (D2) of the remaining wall (5b) of the hollow profile (5), **characterized in that** the longitudinal axis (L1) of the hollow profile (5) is located axially parallel to and at a distance (A) from the common axis (L2) of the reducing sleeve (2) and the boring bar (3).

2. Boring bar arrangement according to Claim 1, **characterized in that** the outer wall (5c) of the stabilizing hollow profile (5) is cylindrical with a circular or oval cross section.

3. Boring bar arrangement according to Claim 1 or 2, **characterized in that** the outer wall (5c) of the stabilising hollow profile (5) has a cross section with flattened portions (5d).

4. Boring bar arrangement according to one of the preceding claims, **characterized in that** in the region of its lowest thickness (D1), the hollow profile wall (5b) has ½ to 1/30 of the thickness of the hollow profile wall in the region of its greatest thickness (D2).

5. Boring bar arrangement according to one of the preceding claims, **characterized in that** the stabilizing hollow profile (5) is integrally moulded on the front face of the reducing sleeve (2).

6. Boring bar arrangement according to one of Claims 1 to 4, **characterized in that** the stabilizing hollow profile (5) is inserted and fixed, in particular longitudinally adjustably, in a longitudinal recess in the reducing sleeve (2).

7. Boring bar arrangement according to one of the preceding claims, **characterized in that** the distance of the axis (L1) of the stabilizing hollow profile (5) from the axis (L2) of the reducing sleeve and the boring bar is 1/10 to 1/30, preferably ¼ to ¾, of the diameter of the boring bar (3).

8. Boring bar arrangement according to one of the preceding claims, **characterized in that** on the side or in the region of the device at which the cutting tool (4) projects, the covering wall (5b) of the hollow profile has a lower thickness (D1) than a thickness (D2) of the hollow profile wall (5b) on the remaining sides/in the remaining regions.

9. Boring bar arrangement according to one of the preceding claims, **characterized in that** the cross-sectional area of the boring bar (3) in the region (3c) remote from the cutting tool is greater than in the region (3d) closer to the cutting tool, so that the cross-sectional area decreases from the clamping point towards the cutting tool (4).

10. Boring bar arrangement according to Claim 9, **characterized in that** the cross-sectional area of the boring bar (3) decreases stepwise.

## Revendications

1. Agencement de barre d'alésage avec une barre d'alésage (3) et un dispositif de fixation (1) pour fixer la barre d'alésage (3) sur une machine d'usinage par enlèvement de copeaux avec une douille de réduction cylindrique (2) pouvant être fixée dans le mandrin de la machine, à l'extrémité avant de laquelle, détournée du mandrin de la machine, fait saillie un profilé creux (5) dont l'espace intérieur (5a), notamment cylindrique, coaxial à l'axe (L2) de la douille de réduction (2), reçoit la barre d'alésage (3), une zone d'extrémité de la barre d'alésage (3) qui fait saillie du profilé creux portant un outil de coupe (4), la paroi (5b) du profilé creux (5) stabilisant la barre d'alésage (3), se trouvant entre l'espace intérieur de profilé creux (5a) et la paroi extérieure de profilé creux, présentant une épaisseur (D1) inférieure dans la zone latérale du dispositif où l'outil de coupe (4) fait saillie sur la barre d'alésage (3) qu'une épaisseur (D2) du reste de la paroi (5b) du profilé creux (5),
**caractérisé en ce que**
l'axe longitudinal (L1) du profilé creux (5) est situé en parallélisme axial avec et à une distance (A) de l'axe commun (L2) de la douille de réduction (2) et de la barre d'alésage (3).

2. Agencement de barre d'alésage selon la revendication 1, **caractérisé en ce que** la paroi extérieure (5c) du profilé creux stabilisateur (5) est cylindrique avec une section transversale circulaire ou ovale.

3. Agencement de barre d'alésage selon la revendication 1 ou 2, **caractérisé en ce que** la paroi extérieure (5c) du profilé creux stabilisateur (5) présente une section transversale avec des aplatissements (5d).

4. Agencement de barre d'alésage selon l'une quelconque des revendications précédentes, **caractérisé en ce que** la paroi de profilé creux (5b) présente, dans la zone de sa plus faible épaisseur (D1), de ½ à 1/30 de l'épaisseur que présente la paroi de profilé creux dans la zone de sa plus grande épaisseur (D2).

5. Agencement de barre d'alésage selon l'une quelconque des revendications précédentes, **caractérisé en ce que** le profilé creux stabilisateur (5) est formé sur le côté frontal avant de la douille de réduction (2).

6. Agencement de barre d'alésage selon l'une quelconque des revendications 1 à 4, **caractérisé en ce que** le profilé creux stabilisateur (5) est inséré et fixé dans un évidement longitudinal de la douille de réduction (2), notamment de manière réglable longitudinalement.

7. Agencement de barre d'alésage selon l'une quelconque des revendications précédentes, **caractérisé en ce que** la distance entre l'axe (L1) du profilé creux stabilisateur (5) et l'axe (L2) de la douille de réduction et de la barre d'alésage est de 1/10 à 1/30, de préférence de ¼ à ¾, du diamètre de la barre d'alésage (3).

8. Agencement de barre d'alésage selon l'une quelconque des revendications précédentes, **caractérisé en ce que**, sur le côté ou la zone du dispositif où l'outil de coupe 4 fait saillie, la paroi recouvrante (5b) du profilé creux présente une épaisseur (D1) inférieure à une épaisseur (D2) de la paroi de profilé creux (5b) sur les autres côtés/zones.

9. Agencement de barre d'alésage selon l'une quelconque des revendications précédentes, **caractérisé en ce que** la surface de section transversale de la barre d'alésage (3) est plus grande dans la zone (3c) éloignée de l'outil de coupe que dans la zone (3d) plus proche de l'outil de coupe, de telle sorte que la surface de section transversale diminue depuis le point de serrage vers l'outil de coupe (4).

10. Agencement de barre d'alésage selon la revendication 9, **caractérisé en ce que** la réduction de la surface de section transversale de la barre d'alésage (3) s'effectue par étapes.
